# EUROPEAN PATENT SPECIFICATION

(11) **EP 1 681 866 B1**
(45) Date of publication and mention of the grant of the patent: **19.04.2017**
(21) Application number: 06100002.2
(22) Date of filing: 02.01.2006
(51) Int. Cl.: H04N 5/76

(54) **Method for pre-programmed recording**
Verfahren für vorprogrammierte Aufzeichnung
Procédé d'enregistrement préprogrammé

(30) Priority: 12.01.2005 EP 05300025
(43) Date of publication of application: 19.07.2006
(73) Proprietor: Thomson Licensing, 92130 Issy-les-Moulineaux (FR)
(72) Inventor: Dumont, Frank, 269564, Singapore (SG)
(74) Representative: Huchet, Anne

(56) References cited:
- EP-A- 0 584 991
- EP-A- 0 802 682
- EP-A- 0 929 072
- US-A1- 2002 009 289

## Description

The present invention relates to a method for performing pre-programmed recording in an apparatus for reading from and writing to recording media, and to an apparatus for reading from and writing to recording media using such method.

Many audio/video devices such as VCRs (video cassette recorders), DVD-recorders (digital versatile disk), HDD-recorders (hard disk drive), or combinations of these audio/video devices, offer the possibility to schedule recordings, i.e. to specify at which time a recording shall start. Specifically in audio/video devices which record compressed digital a/v data, e.g. DVD-recorders, it is common to provide a choice of different bit rates for recording. The user then has the possibility to record a/v data with a selected recording quality from high quality (high bit rate) to low quality (low bit rate) on the recording medium. The total length of recording varies accordingly from small to large. On a single recording medium a/v data with different recording quality can be mixed. The recording quality can usually be specified at the time of pre-programming the recording, either individually for each recording or generally for all recordings. In case the remaining storage space is not sufficient for recording a pre-programmed recording with the specified recording quality, in some audio/video devices the recording quality is automatically adapted to the available storage space. This adapted recording quality is used for all remaining pre-programmed recordings, which are to be recorded on the same recording medium. This leads to the problem that none of the recordings is recorded with high quality, which might be annoying to the user.

To overcome the above problem JP09-138698 discloses a method for recording sound data, whereby, in case the remaining storage space on a recording medium is not sufficient for a recording with high recording quality, previous recordings are re-recorded on the recording medium with lower recording quality in order to increase the available storage space. The recording quality used for re-recording the previous recordings is determined by a plurality of priority parameters. Though this approach allows to perform the pre-programmed recordings with the desired quality, especially in the case of video data a large amount of time is necessary for re-recording the previous recordings. This can be unpleasant for the user as well.

EP 0929072, which is considered to be the closest prior art, discloses a digital recording system using a variable recording rate. If one or more recordings are scheduled, the system checks if these recordings can be performed with the desired bit rate. If the available free space is insufficient, the system reduces the bit rate for at least some of the scheduled recordings based on the order of scheduling.

It is an object of the invention to propose a further method for performing pre-programmed recording on a recording medium having insufficient remaining storage space for performing a pre-programmed recording with a specified recording quality.

According to the invention, this object is achieved by a method for performing pre-programmed recording, having the steps of:
- determining the storage space required on a recording medium for performing one or more pre-programmed recordings with a specified quality;
- comparing the available storage space on the recording medium with the required storage space; and
- in case the required storage space exceeds the available storage space, reducing the specified recording quality for one or more of the pre-programmed recordings in accordance with settable priority indicators for the pre-programmed recordings such that the required storage space no longer exceeds the available storage space.
When recordings are pre-programmed with specified recording qualities, it is checked if the available storage space on the recording medium is sufficient for performing all pre-programmed recordings with their specified quality. If this is not the case, the recording quality for one or more of the pre-programmed recordings is lowered until the available storage space is sufficient for completing all pre-programmed recordings. The reduction of the recording quality is performed based on one or more priority indicators. Possible priority indicators include the genre of a recording, e.g. movie or news etc. A user is more likely to prefer a high recording quality for a movie or a sports event, while he might accept a lower quality for a news magazine. Instead or in addition to the genre the recording length or the time of day of recording can be used. As there are typical broadcasting times and durations for movies or other types of programs, this information helps to determine the importance of a recording. Further indicators are the type or recording, i.e. single or daily recording, the source of recording, e.g. satellite or cable etc., the recorded channel (news channel, sports channel, movie channel, etc.), or the owner of the recording, i.e. the person who pre-programmed the recording. Of course, other priority indicators are also possible. Advantageously, the priority indicators can be defined and/or adjusted by the user.

Preferably, the available storage space on the recording medium is compared with the required storage space in one or more of a plurality of instances. During pre-programming a recording, it can immediately be checked if the available storage space is sufficient. If this is not the case, the user performing the pre-programming is advantageously requested to either provide a different recording medium, or to specify priority indicators, e.g. be specifying a different recording quality for the currently pre-programmed recording or one or more of the previously pre-programmed recordings. The same applies when the recording medium is exchanged by the user. In this case it may happen that on the new recording medium the available storage space is no longer sufficient. The user should then be asked for the priority indicators. Alternatively, the available storage space can also be checked shortly before initiating a pre-programmed recording. In this case, as the user will usually not be available for specifying different recording qualities or changing the recording medium, the recording qualities are automatically determined based on the available priority indicators. A further instance for checking the available storage space is when a non-pre-programmed recording is finished. If the user starts an immediate recording, it is usually not known in advance how much storage space this recording will need. Therefore, when the non-pre-programmed recording is finished it is preferably checked if the remaining storage space still is sufficient for the pre-programmed recordings.

Favorably, the originally specified recording quality is stored in a memory when the recording quality of a pre-programmed recording is reduced. This allows to later restore the originally specified recording quality for one or more of the pre-programmed recordings when it is determined that the available storage space has been increased. This can happen, for example, when the recording medium is exchanged, when the user deletes a previously recorded program, or when the user modifies one or more of the pre-programmed recordings.

Preferably, the specified recording quality for a pre-programmed recording currently being performed is reduced upon receiving an indication that the actual recording length exceeds the pre-programmed recording length. For example, many broadcasters emit a VPS signal (Video Programming System) for controlling pre-programmed recordings. If it is determined that a program such as a life event exceeds the pre-programmed recording time, the recording quality is reduced in order to minimize the effect on the remaining storage space.

Advantageously, a method according to the invention is used in an apparatus for reading from and writing to recording media for performing pre-programmed recording on a recording medium.

For a better understanding the invention shall now be explained in more detail in the following description with reference to the figures. It is understood that the invention is not limited to this exemplary embodiment and that specified features can also expediently be combined and/or modified without departing from the scope of the present invention. In the figures:
- Fig. 1: depicts a method for performing pre-programmed recording according to the invention, and
- Fig. 2: schematically shows an apparatus for reading from and writing to recording media using the method according to the invention.

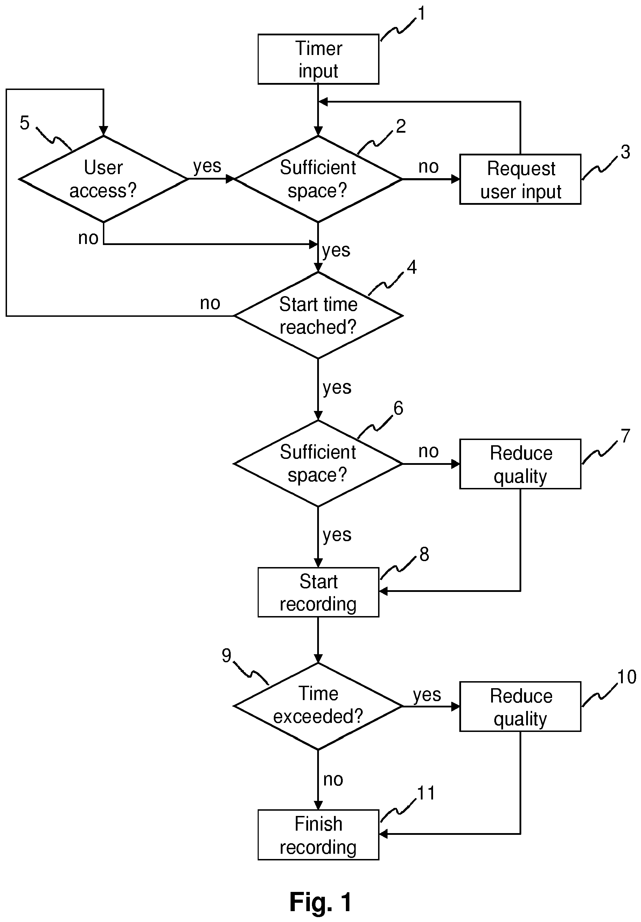

In Fig. 1 a method for performing pre-programmed recording according to the invention is depicted. When a user inputs 1 a timer, i.e. when the user schedules a pre-programmed recording, it is immediately checked 2 if the available storage space on the recording medium, on which the program is to be recorded, is sufficient for recording all pre-programmed recordings with their specified recording quality. If this is not the case, the user is requested 3 to input adapted priority indicators, or to provide a different recording medium. Alternatively he might also delete one or more previous or pre-programmed recordings. It is then again checked if the available storage space is sufficient. Instead of requesting 3 the user for input, it is likewise possible to automatically adapt the recording quality to the available storage space as described later on. As long as the start time of a pre-programmed recording is not yet reached 4, it is constantly checked 5 for different types of user accesses. For example, user access can consist in performing a non-pre-programmed recording, in changing the recording medium, or in deleting one or more previous or pre-programmed recordings. In any of these cases it is tested 2 if the available storage space is sufficient. When the start time of a pre-programmed recording is reached 4, it is once again determined 6 if the available storage space is sufficient. If this is not the case, the recording quality of at least one of the pre-programmed recordings is reduced 7. This can be the current recording or any pre-programmed recording starting later. After the recording operation has started 8, it is analyzed 9 if the actual recording length exceeds the pre-programmed length, e.g. due to overtime in a life event etc. When this happens the recording quality is reduced 10 until the recording operation is finished 11.

In the example in Fig. 1 the available storage space is checked 2, 6 at different instances. This takes into account that at some instances the user can be asked 3 to provide further input, while at other instances this is not feasible. Of course, it is likewise possible to only check 6 the available storage space immediately before starting 8 a recording, or just after receiving 1 a timer input.

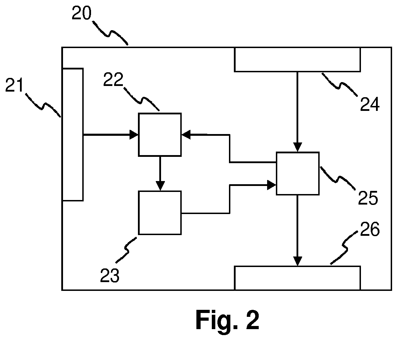

Fig. 2 schematically shows an apparatus 20 for reading from and writing to recording media capable of performing the method according to the invention. An a/v signal is received at an input 21 and relayed to a recording unit 23 via a coding unit 22 for coding or recoding the received a/v signal with a specific bit rate. The apparatus 20 has a user interface 24 for receiving, inter alia, timer information from a user. The received timer information is stored in a memory of a timer processing block 25. The timer processing block calculates the necessary storage space on a recording medium for performing all pre-programmed recordings with their specified quality, and receives information from the recording unit 23 on the available storage space on the currently loaded recording medium. It then compares the required storage space with the available storage space. In case the available storage space is not sufficient, the timer processing block 25 informs the user accordingly via a display 26. The user can then enter priority indicators for one or more of the pre-programmed recordings via the user interface 24. Without user input, the timer processing block 25 reduces the quality of at least one of the pre-programmed recording in accordance with the available priority indicators. When a pre-programmed recording is started, the timer processing block 25 informs the coding unit 22 about the bit-rate to be used for coding or recoding the a/v signal. The coded a/v signal is then recorded by the recording unit 23.

## Claims

1. A method for performing scheduled recording of two or more programs on a recording medium, wherein for each scheduled recording a recording bit rate is specified by a user for recording the program on the recording medium, the method comprising:
- determining a storage space required on the recording medium for performing the two or more scheduled recordings with the specified recording bit rates;
- before starting a first scheduled recording, during scheduling of a recording, when the recording medium is exchanged, or when a non-scheduled recording is finished, comparing (2, 6) an available storage space on the recording medium with the required storage space;
- in case the required storage space exceeds the available storage space, reducing (7, 10) for one or more of the scheduled recordings the specified recording bit rate that has been specified by the user such that the required storage space no longer exceeds the available storage space; and
- starting (8) recording of the first scheduled recording;
**characterized in that** the specified recording bit rate is reduced (7, 10) in accordance with customizable priority indicators for the scheduled recordings, wherein the priority indicators for the scheduled recordings include at least one of genre of a recording, duration of a recording, time of day of recording, type of recording, source of recording, recorded channel, or owner of recording.

2. The method according to claim 1, **wherein** a value of the recording bit rate of a scheduled recording that has originally been specified by the user is stored in a memory before starting the scheduled recording when the recording bit rate of the scheduled recording is reduced in accordance with the user-customizable priority indicators.

3. The method according to claim 2, **wherein** the recording bit rate that has originally been specified by the user is restored for one or more of the scheduled recordings when it is determined that the available storage space has been increased.

4. The method according to one of claims 1 to 3, **further** comprising requesting (3) the user to specify priority indicators for one or more of the scheduled recordings.

5. The method according to one of claims 1 to 4, **further** comprising reducing (10) the recording bit rate for a scheduled recording currently being performed upon receiving (9) an indication that the actual recording length exceeds the scheduled recording length.

6. The method according to one of claims 1 to 5, **wherein** the priority indicators for the scheduled recordings are adjustable by a user.

7. An apparatus (20) for writing to recording media, the apparatus (20) comprising:
- an input (21) configured to receive programs;
- a coding unit (22) configured to code the received programs with specified bit rates;
- a recording unit (23) configured to record the coded programs on a recording medium;
- a user interface (24) configured to receive scheduling information for scheduled recording of two or more programs on the recording medium, wherein for each scheduled recording a recording bit rate is specified by a user for recording the program on the recording medium;
- a scheduled recording processing block (25), which is configured to perform:
- determining a storage space required on the recording medium for performing the two or more scheduled recordings with the specified recording bit rates;
- before starting a first scheduled recording, during scheduling of a recording, when the recording medium is exchanged, or when a non-scheduled recording is finished, comparing (2, 6) an available storage space on the recording medium with the required storage space;
- in case the required storage space exceeds the available storage space, reducing (7, 10) for one or more of the scheduled recordings the specified recording bit rate that has been specified by the user such that the required storage space no longer exceeds the available storage space; and
- starting (8) recording of the first scheduled recording
**characterized in that** the scheduled recording processing block (25) is configured to reduce (7, 10) the specified recording bit rate in accordance with customizable priority indicators for the scheduled recordings, wherein the priority indicators for the scheduled recordings include at least one of genre of a recording, duration of a recording, time of day of recording, type of recording, source of recording, recorded channel, or owner of recording.

## Patentansprüche

1. Verfahren zum Ausführen einer geplanten Aufzeichnung von zwei oder mehr Sendungen auf einem Aufzeichnungsmedium, wobei für jede geplante Aufzeichnung durch einen Nutzer eine Aufzeichnungsbitrate zum Aufzeichnen der Sendung auf dem Aufzeichnungsmedium spezifiziert wird, wobei das Verfahren umfasst:
- Bestimmen eines Speicherplatzes, der auf dem Aufzeichnungsmedium erforderlich ist, um die zwei oder mehr geplanten Aufzeichnungen mit den spezifizierten Aufzeichnungsbitraten auszuführen;
- Vergleichen (2, 6) eines verfügbaren Speicherplatzes auf dem Aufzeichnungsmedium mit dem erforderlichen Speicherplatz, wenn das Aufzeichnungsmedium vor Beginn einer ersten geplanten Aufzeichnung, während des Planens einer Aufzeichnung gewechselt wird oder wenn eine ungeplante Aufzeichnung abgeschlossen wird;
- Verringern (7, 10) der spezifizierten Aufzeichnungsbitrate, die durch den Nutzer spezifiziert worden ist, für eine oder mehrere der geplanten Aufzeichnungen in der Weise, dass der erforderliche Speicherplatz den verfügbaren Speicherplatz nicht mehr übersteigt, falls der erforderliche Speicherplatz den verfügbaren Speicherplatz übersteigt; und
- Beginnen (8) des Aufzeichnens der ersten geplanten Aufzeichnung,
**dadurch gekennzeichnet, dass** die spezifizierte Aufzeichnungsbitrate in Übereinstimmung mit nutzerdefinierbaren Prioritätsindikatoren für die geplanten Aufzeichnungen verringert wird (7, 10), wobei die Prioritätsindikatoren für die geplanten Aufzeichnungen ein Genre einer Aufzeichnung und/oder eine Dauer einer Aufzeichnung und/oder eine Tageszeit der Aufzeichnung und/oder einen Typ der Aufzeichnung und/oder eine Quelle der Aufzeichnung und/oder einen aufgezeichneten Kanal und/oder einen Eigentümer der Aufzeichnung enthalten.

2. Verfahren nach Anspruch 1, **wobei** ein Wert der Aufzeichnungsbitrate einer geplanten Aufzeichnung, die durch den Nutzer ursprünglich spezifiziert worden ist, in einem Speicher gespeichert wird, bevor die geplante Aufzeichnung begonnen wird, wenn die Aufzeichnungsbitrate der geplanten Aufzeichnung in Übereinstimmung mit den nutzerdefinierbaren Prioritätsindikatoren verringert wird.

3. Verfahren nach Anspruch 2, **wobei** die Aufzeichnungsbitrate, die durch den Nutzer ursprünglich spezifiziert worden ist, für eine oder mehrere der geplanten Aufzeichnungen wiederhergestellt wird, wenn bestimmt wird, dass der verfügbare Speicherplatz erhöht worden ist.

4. Verfahren nach einem der Ansprüche 1 bis 3, das **ferner** das Anfordern (3), dass der Nutzer für eine oder mehrere der geplanten Aufzeichnungen Prioritätsindikatoren spezifiziert, umfasst.

5. Verfahren nach einem der Ansprüche 1 bis 4, das **ferner** das Verringern (10) der Aufzeichnungsbitrate für eine geplante Aufzeichnung, die gegenwärtig ausgeführt wird, beim Empfang (9) einer Angabe, dass die Länge der tatsächlichen Aufzeichnung die Länge der geplanten Aufzeichnung übersteigt, umfasst.

6. Verfahren nach einem der Ansprüche 1 bis 5, **wobei** die Prioritätsindikatoren für die geplanten Aufzeichnungen durch einen Nutzer einstellbar sind.

7. Vorrichtung (20) zum Schreiben auf Aufzeichnungsmedien, wobei die Vorrichtung (20) umfasst:
- einen Eingang (21), der zum Empfangen von Sendungen konfiguriert ist;
- eine Codierungseinheit (22), die zum Codieren der empfangenen Sendungen mit spezifizierten Bitraten konfiguriert ist;
- eine Aufzeichnungseinheit (23), die zum Aufzeichnen der codierten Sendungen auf einem Aufzeichnungsmedium konfiguriert ist;
- eine Nutzerschnittstelle (24), die zum Empfangen von Planungsinformationen für die geplante Aufzeichnung von zwei oder mehr Sendungen auf dem Aufzeichnungsmedium konfiguriert ist, wobei durch einen Nutzer für jede geplante Aufzeichnung eine Aufzeichnungsbitrate zum Aufzeichnen der Sendung auf dem Aufzeichnungsmedium spezifiziert wird;
- einen Block (25) zum Verarbeiten der geplanten Aufzeichnung, der dafür konfiguriert ist, Folgendes auszuführen:
- Bestimmen eines Speicherplatzes, der auf dem Aufzeichnungsmedium erforderlich ist, um die zwei oder mehr geplanten Aufzeichnungen mit den spezifizierten Aufzeichnungsbitraten auszuführen;
- Vergleichen (2, 6) eines verfügbaren Speicherplatzes auf dem Aufzeichnungsmedium mit dem erforderlichen Speicherplatz, wenn das Aufzeichnungsmedium vor Beginn einer ersten geplanten Aufzeichnung, während des Planens einer Aufzeichnung gewechselt wird oder wenn eine ungeplante Aufzeichnung abgeschlossen wird;
- Verringern (7, 10) der spezifizierten Aufzeichnungsbitrate, die durch den Nutzer spezifiziert worden ist, für eine oder mehrere der geplanten Aufzeichnungen in der Weise, dass der erforderliche Speicherplatz den verfügbaren Speicherplatz nicht mehr übersteigt, falls der erforderliche Speicherplatz den verfügbaren Speicherplatz übersteigt; und
- Beginnen (8) des Aufzeichnens der ersten geplanten Aufzeichnung,
**dadurch gekennzeichnet, dass** der Block (25) zum Verarbeiten der geplanten Aufzeichnung dafür konfiguriert ist, die spezifizierte Aufzeichnungsbitrate in Übereinstimmung mit nutzerdefinierbaren Prioritätsindikatoren für die geplanten Aufzeichnungen zu verringern (7, 10), wobei die Prioritätsindikatoren für die geplanten Aufzeichnungen ein Genre einer Aufzeichnung und/oder eine Dauer einer Aufzeichnung und/oder eine Tageszeit der Aufzeichnung und/oder einen Typ der Aufzeichnung und/oder eine Quelle der Aufzeichnung und/oder einen aufgezeichneten Kanal und/oder einen Eigentümer der Aufzeichnung enthalten.

## Revendications

1. Procédé d'enregistrement programmé de deux programmes ou plus sur un support d'enregistrement, dans lequel pour chaque enregistrement programmé, un débit binaire d'enregistrement est spécifié par un utilisateur pour enregistrer le programme sur le support d'enregistrement, le procédé comprenant les étapes suivantes :
- détermination d'un espace de stockage requis sur le support d'enregistrement pour effectuer les deux enregistrements programmés ou plus avec les débits binaires d'enregistrement spécifiés ;
- avant le démarrage d'un premier enregistrement programmé, pendant la programmation d'un enregistrement, lors du changement de support d'enregistrement ou lorsqu'un enregistrement non programmé est terminé, comparaison (2, 6) d'un espace de stockage disponible sur le support d'enregistrement avec l'espace de stockage requis ;
- si l'espace de stockage requis est supérieur à l'espace de stockage disponible, réduction (7, 10) pour un ou plusieurs des enregistrements programmés du débit binaire d'enregistrement spécifié par l'utilisateur de sorte que l'espace de stockage requis ne soit plus supérieur à l'espace de stockage disponible ; et
- démarrage (8) de l'enregistrement du premier enregistrement programmé ;
**caractérisé en ce que** le débit binaire d'enregistrement spécifié est réduit (7, 10) conformément à des indicateurs de priorité personnalisables pour les enregistrements programmés, dans lequel les indicateurs de priorité pour les enregistrements programmés incluent au moins le genre d'un enregistrement, la durée d'un enregistrement, l'heure d'enregistrement, le type d'enregistrement, la source d'enregistrement, le canal enregistré ou le propriétaire de l'enregistrement.

2. Procédé selon la revendication 1, **dans lequel** une valeur du débit binaire d'enregistrement d'un enregistrement programmé initialement spécifiée par l'utilisateur est stockée dans une mémoire avant le démarrage de l'enregistrement programmé lorsque le débit binaire d'enregistrement de l'enregistrement programmé est réduit conformément aux indicateurs de priorité personnalisables par l'utilisateur.

3. Procédé selon la revendication 2, **dans lequel** le débit binaire d'enregistrement initialement spécifié par l'utilisateur est restauré pour un ou plusieurs des enregistrements programmés lorsqu'il est déterminé que l'espace de stockage disponible a augmenté.

4. Procédé selon l'une des revendications 1 à 3, comprenant **en outre** l'invitation (3) de l'utilisateur à spécifier des indicateurs de priorité pour un ou plusieurs des enregistrements programmés.

5. Procédé selon l'une des revendications 1 à 4, comprenant **en outre** la réduction (10) du débit binaire d'enregistrement pour un enregistrement programmé en cours d'exécution à la réception (9) d'une indication selon laquelle la durée d'enregistrement réelle dépasse la durée d'enregistrement programmée.

6. Procédé selon l'une des revendications 1 à 5, **dans lequel** les indicateurs de priorité pour les enregistrements programmés peuvent être adaptés par un utilisateur.

7. Appareil (20) d'écriture sur un support d'enregistrement, l'appareil (20) comprenant :
- une entrée (21) configurée pour recevoir des programmes ;
- une unité de codage (22) configurée pour coder les programmes reçus avec les débits binaires spécifiés ;
- une unité d'enregistrement (23) configurée pour enregistrer les programmes codés sur un support d'enregistrement ;
- une interface utilisateur (24) configurée pour recevoir des informations de programmation pour l'enregistrement programmé de deux programmes ou plus sur le support d'enregistrement, dans lequel pour chaque enregistrement programmé, un débit binaire d'enregistrement est spécifié par un utilisateur pour enregistrer le programme sur le support d'enregistrement ;
- un bloc de traitement d'enregistrement programmé (25), configuré pour effectuer les tâches suivantes :
- détermination d'un espace de stockage requis sur le support d'enregistrement pour effectuer les deux enregistrements programmés ou plus avec les débits binaires d'enregistrement spécifiés ;
- avant le démarrage d'un premier enregistrement programmé, pendant la programmation d'un enregistrement, lors du changement de support d'enregistrement ou lorsqu'un enregistrement non programmé est terminé, comparaison (2, 6) d'un espace de stockage disponible sur le support d'enregistrement avec l'espace de stockage requis ;
- si l'espace de stockage requis est supérieur à l'espace de stockage disponible, réduction (7, 10) pour un ou plusieurs des enregistrements programmés du débit binaire d'enregistrement spécifié par l'utilisateur de sorte que l'espace de stockage requis ne soit plus supérieur à l'espace de stockage disponible ; et
- démarrage (8) de l'enregistrement du premier enregistrement programmé,
**caractérisé en ce que** le bloc de traitement d'enregistrement programmé (25) est configuré pour réduire (7, 10) le débit binaire d'enregistrement spécifié conformément à des indicateurs de priorité personnalisables pour les enregistrements programmés, dans lequel les indicateurs de priorité pour les enregistrements programmés incluent au moins le genre d'un enregistrement, la durée d'un enregistrement, l'heure d'enregistrement, le type d'enregistrement, la source d'enregistrement, le canal enregistré ou le propriétaire de l'enregistrement.
